# EUROPEAN PATENT SPECIFICATION

(11) **EP 2 211 636 B1**
(45) Date of publication and mention of the grant of the patent: **27.04.2011**
(21) Application number: 07851963.4
(22) Date of filing: 27.12.2007
(51) Int. Cl.: A23L 1/01, A23L 1/318

(54) **MICROWAVEABLE MEAT PRODUCT AND PROCESS FOR THE PREPARATION THEREOF**
MIKROWELLENTAUGLICHES FLEISCHPRODUKT UND VERFAHREN ZU SEINER HERSTELLUNG
PRODUIT CARNÉ MICRO-ONDABLE ET SON PROCÉDÉ DE PRÉPARATION

(30) Priority: 22.12.2006 EP 06127088
(43) Date of publication of application: 04.08.2010
(73) Proprietor: MAQSfood International B.V., 4153 BS Beesd (NL)
(72) Inventor: HEISEN, Petrus, Antonius, Maria, NL-4153 BS Beesd (NL)
(74) Representative: Swinkels, Bart Willem
(86) International application number: PCT/NL2007/050703
(87) International publication number: WO 2008/079013

(56) References cited:
- EP-A- 0 669 084
- US-A- 5 512 015
- US-A- 5 711 979
- US-A1- 2003 059 497

## Description

### TECHNICAL FIELD OF THE INVENTION

The present invention provides a microwaveable meat product as well as a process for the preparation of such a microwaveable meat product. More particularly, the present invention provides a pre-treated cut of meat that can be prepared in a microwave to obtain a ready-to-eat meat product that is indistinguishable from a conventionally prepared meat product, e.g. fried meat or grilled meat. The meat product of the present invention may also be prepared using other heating techniques than microwave heating, e.g. by heating in a hot air oven or au bain-marie.

### BACKGROUND OF THE INVENTION

The use of microwave ovens in households and catering has become quite widespread. Since the introduction of microwave ovens, the food industry has been manufacturing microwaveable precooked meals, which are pre-packaged in sterilized and/or frozen form for distribution and which can be prepared for consumption by reheating in a microwave oven. The main advantage of these microwaveable meals resides in the convenience that they offer. However, it is well known that most microwaveable meals when prepared in a microwave oven do not exhibit a good surface texture.

The most noticeable example of this problem can be seen with meat products. Although meat products, such as beef, veal and lamb, can be cooked in a microwave oven, they usually come out looking very pale and unattractive.

Attempts have been made to solve this problem by making certain modifications to the microwave ovens themselves. Some examples include electrical resistors and hot plates. However, these modifications have so far failed to deliver microwave heated meat products with sensory properties that resemble those of conventionally prepared meat products, such a shallow fried, deep fried or grilled meat products.

US 5,512,015 describes meat tenderization process adapted to effect the tenderization of canner and cutter grade primal meats which are to be prepared by the consumer in a microwave oven. The process described in US 5,512,015 comprises the steps of:
- providing a whole primal,
- introducing a mixture of papain, bromelin and ficin enzymes and flavoring to the whole primal,
- tumbling the whole primal in a tumbler, said tumbling step to take place under a first pressure,
- placing and sealing the whole primal in a polymer bag,
- heating the whole primal at a first temperature, for a first time period, which activates the bromelin and ficin, causing tenderization to take place,
- rapidly cooling the primal at a second temperature, for a second time period, which deactivates the bromelin and ficin,
- packaging and transporting the product to a consumer,
- microwaving the product, whereby the papain is activated by the microwave heating, causing the product to be of good flavor, texture and appearance.
A major drawback of the process described in this US patent resides in the fact that during microwave cooking of the treated meat product the surface of the product remains very pale and also does not develop the desirable flavours that are characteristic of e.g. fried or grilled meat.

US 5,711,979 describes a process for preparing and microwaving a meat product having an exterior surface and a nucleus, comprising the steps of:
- freezing said meat product;
- partially thawing said meat product whereby the exterior surface is thawed and the nucleus remains frozen;
- sealing the surface of said partially thawed meat product by conventionally heating the thawed surface on a metallic surface heated to a temperature ranging from 400-600 °C;
- re-freezing said sealed surface of said meat product; and
- microwaving said re-frozen meat product using a two step process comprising:
   ■ regulating microwave energy to thaw the meat product; and
   ■ upon adequate thawing, increasing said energy to cook said meat product.
The process described in US 5,711,979 is unduly complex and laborious. Furthermore, the meat product obtained after microwaving lacks the desirable tender, juicy structure that is typical for conventionally prepared meat products.

In view of the inherent shortcomings of the solutions that have been proposed in the prior art, it is an objective of the present invention to provide a meat product that can be heated in a conventional microwave oven (or in a hot air oven or au bain-marie) to yield a ready-to-eat meat product with a juicy bite and the surface appearance of conventionally prepared meat.

### SUMMARY OF THE INVENTION

The inventors have developed a process that can deliver a microwaveable meat product that meets the aforementioned requirements. The process according to the present invention comprises the following successive steps:
- providing a cut of raw meat;
- tenderizing the cut of raw meat;
- subjecting the surface of the tenderized meat to a heat treatment to achieve surface browning whilst at the same time ensuring that the interior of the product remains uncooked; and
- packaging the heat treated meat product.

The process according to the present invention ensures that: (i) the cells in the interior of the microwaveable meat product remain undamaged; (ii) the microwaveable meat product is a uniformally tender meat product; and (iii) the appearance of the surface of the microwaveable meat product resembles that of a conventionally prepared meat product. Thus, this microwaveable meat product can be converted into a ready-to-consume meat product of excellent quality by simply heating it in a microwave (a hot air oven or au bain-marie etc.).

### DETAILED DESCRIPTION OF THE INVENTION

Accordingly, one aspect of the present invention relates to a process for preparing a microwaveable meat product, said process comprising the successive steps of:
- providing a cut of raw meat comprising an exterior surface and an inner core, said inner core consisting of the part of the meat that is located 1 cm below the exterior surface;
- contacting the exterior surface of the meat with a tenderizing agent to form a tenderized meat product;
- subjecting the tenderized meat product to a heat treatment during which the exterior surface of the meat product is heated to at least 120 °C to achieve a browning of the exterior surface, whilst ensuring that the temperature within the inner core remains below 60 °C; and
- packaging the heat treated product for later use.

The term "tenderizing" refers to the process of breaking down collagens in meat to make it more palatable for consumption.

The surface browning achieved during the heat treatment of the tenderized meat product is caused by heat induced reactions, notably Maillard reactions. These Maillard reactions will occur on the meat surface once the water content has been reduced to such a level that the surface temperature can rise to temperatures well above the boiling point of water. The higher the temperature, the faster these browning reactions will proceed.

The process of the present invention may suitably be used to produce a variety of microwaveable meat products. The benefits of the process are particularly pronounced when used in the production of a microwaveable meat product from a cut of red meat. Examples of red meat that can advantageously be pre-treated in accordance with the present invention include beef, veal, lamb, mutton, venison, pork, goat and rabbit.

In the present process the cut of meat preferably has a weight in the range of 50-500 grams. Even more preferably, the cut of meat has a weight in the range of 70-300 g.

The present invention encompasses the use of a variety of tenderizing agents, including agents containing calcium chloride and/or enzymes. According to a particularly preferred embodiment, the tenderizing agent employed contains a proteolytic enzyme. Examples of proteolytic enzymes that can advantageously be employed in the present process include bromelain, papain, ficin, fungal protease, bacterial protease, trypsin, chymotrypsin, and pepsin. Particularly good results have been achieved by the inventors by using a tenderizing agent that contains bromelain, especially bromelain isolated from pineapple.

If the tenderizing agent contains a proteolytic enzyme, the amount of enzyme employed depends amongst other things on the proteolytic activity of the enzyme. Preferably, the tenderizing agent employed in the present process comprises a proteolytic activity of 0.001-0.1 Anson Units (AU)/100 g meat, more preferably of 0.002-0.05 AU/100 g meat and most preferably of 0.003-0.05 AU/100 g meat. One AU is defined as the amount of enzyme which digests denatured hemoglobin at 25 °C, pH 7.5 in 10 min, at an initial rate that liberates an amount of trichloroacetic acid-soluble material that is equivalent to one milliequivalent of tyrosine, when measured by color production using a phenol reagent.

In an advantageous embodiment of the invention the tenderizing agent is a liquid or a paste. The use of a liquid or a paste offers the advantage that is possible to submerge the meat product in the tenderizing agent. Furthermore, it is possible to conveniently apply a liquid onto the meat product by spraying or to apply the paste by e.g. brushing. Most preferably, the tenderizing agent is a liquid, especially an aqueous liquid.

According to yet another advantageous embodiment of the present process the exterior surface of the meat is contacted with the tenderizing agent by submersing the meat in the tenderizing agent. By submersing the meat in the tenderizing agent it is ensured that the total surface of the meat product is contacted with the tenderizing agent. Furthermore, submersion offers the advantage that following absorption of the active tenderizing component by the meat, said component can be replenished at the surface of the meat product by diffusion.

In the present process the tenderized meat product is preferably rinsed with an aqueous liquid, e.g. water, before being subjected to the heat treatment. By rising the tenderized meat product it is ensured that any particulate matter contained in the tenderizing agent is removed from the surface of the meat product.

As regards the heat treatment of the tenderized meat it is critical that on the one hand the exterior surface of the tenderized meat product reaches a sufficiently high temperature to cause browning reactions to occur whilst at the same time ensuring that the interior core of the product does not heat up beyond 60 °C and preferably not beyond 50 °C. If the inner core is heated to temperatures in excess of 60 °C the cells will be destroyed, meaning that these cells will start releasing water.

In order to achieve surface browning without heating the inner core to higher temperatures, it is preferred to employ a heat treatment that involves external heat supply, as contrasted to internal heat supply by e.g. microwaving. When heat is supplied externally, first the surface of the meat product will heat up, following which heat will gradually dissipate into the product. Thus, in order to ensure that the inner core of the meat product does not heat up to undesirably high temperatures, the heat treatment should be discontinued before too much heat has dissipated into the inner core. Typically, this can be achieved by completing the heat treatment of the tenderized meat within 5 minutes, most preferably within 3 minutes.

Suitable heating techniques that may be applied for heat treating the tenderized meat product include infrared heating and grilling. In order to achieve rapid surface heating it is preferred that during the heat treatment the exterior surface of the meat product is heated to at least 150 °C. As explained herein before it is advantageous to achieve rapid browning of the surface as this minimizes the chance of overheating of the inner core.

Once the heat treatment is stopped, there is a risk that heat absorbed by the surface of the product will dissipate into the inner core of the meat product, thus resulting in an undesirable temperature increase of the inner core. Hence, in accordance with a particularly preferred embodiment, the heat treated product is cooled to a temperature below 60 °C, preferably below 50 °C within 3 minutes, preferably within 2 minutes after the heat treatment.

An important benefit of the present process resides in the fact that the cells within the inner core of the meat product remain intact until the final preparation step by a consumer or caterer. Thus, the inner core of the meat product will retain its juicy nature as it will not loose water following heat induced cell destruction. Accordingly, in the present process the moisture content of the inner core of the heat treated meat product usually differs by not more than 10% from the moisture content of the original cut of meat.

In the present process the heat treated product is packaged for later use by a consumer or caterer. According to one embodiment, the heat treated product is packaged in a sealed package, preferably under an inert atmosphere. According to another embodiment the heat treated product is first frozen and then packaged or packaged and subsequently frozen.

In order to facilitate distribution it is preferred to ship and store the packaged meat product under chilled or frozen conditions. According to a particularly preferred embodiment, the packaged meat product is stored for at least 2 days at a temperature of less than 7 °C before being prepared for consumption by subjecting the meat product to a further heat treatment. The aforementioned further heat treatment by e.g. a consumer or caterer advantageously comprises microwave heating or oven heating. Most preferably, the further heat treatment comprise microwave heating.

Another aspect of the invention relates to a packaged microwaveable meat product comprising an exterior surface and an inner core, said inner core consisting of the part of the meat that is located 1 cm below the exterior surface, said microwaveable product being characterized in that the interior core of the meat product is uncooked and tenderised and in that the exterior surface of the meat has been browned by heating.

As explained herein before the present invention preferably employs a tenderizing agent containing a proteolytic enzyme. Consequently, in a preferred embodiment, the inner core of the microwaveable meat product contains a proteolytic enzyme that is foreign (i.e. not endogenous) to the raw meat. As explained herein before, the proteolytic enzyme may suitable be selected from the group consisting of bromelain, papain, ficin, fungal protease, bacterial protease, trypsin, chymotrypsin, pepsin and combinations thereof.

According to another preferred, the cells within the inner core of the microwaveable meat product are intact, i.e. have not been damaged by heat treatment. In addition, the present microwaveable meat product is characterized in that the meat proteins contained within the inner core are not denatured. In contrast, the meat proteins in the surface of the same meat product preferably have been denatured.

The packaged microwaveable meat product preferably is a red meat product with an inner core that is still red. Furthermore, said inner core advantageously has a high moisture content, e.g. a moisture content of at least 60 wt.%.

The microwaveable meat product is advantageously selected from the group consisting of beef, veal, lamb, mutton, venison, pork, goat and rabbit. Typically the packaged microwaveable meat product has a weight in the range of 50-500 grams, preferably of 70-300 grams.

The microwaveable meat product may suitably be packaged in a sealed package under an inert atmosphere, e.g. nitrogen. This type of package is particularly suited for chilled distribution Alternatively, the microwaveable meat product is packaged in frozen form. If packaged in frozen form, it is not necessary to seal the package or to employ an inert atmosphere.

The invention is further illustrated by the following examples.

### EXAMPLES

The following meat products were pre-treated in accordance with the present invention to yield microwaveable meat products.

| Origin | Product | Weight | Thickness^{#} |
|---|---|---|---|
| Thin loin | Entrecôte | 200 gram | 2,5 / 3 cm. |
| Rib-eye | Rib-eye | 225 gram | 3 cm. |
| Thick loin | Steak | 160 gram | 3,5/4 cm. |
| Thick loin | Double steak | 320 gram | 4 cm. |
| Tenderloin | Tournedos | 160 gram | 4,5/5 cm. |

| | | | |
|---|---|---|---|
| ^{#} In order to achieve consistent browning of the heat treated meat surface it is important to select meat products with uniform thickness. | | | |

Several liters of tenderizing liquid were prepared by dispersing 12 g/l of a powder mix in water under thorough mixing. The composition of the powder mix was as follows:

| | % by weight |
|---|---|
| Sodium chloride | 61 |
| Sucrose | 33 |
| Bromelaine | 6 |

Next, the tenderizing liquid was poured into stainless steel receptacles (lxbxh in cm = 53x23.5x 10). Pieces of each of the above mentioned meat products were placed in a liquid filled receptacle as a single layer. If, after the introduction of the meat products, not all of the products were completely submerged in the tenderizing liquid, extra liquid was added. Immediately after filling, the receptacles were covered with a water-impermeable foil and kept at 2 °C for 24 hrs.

After these 24 hrs the contents of the receptacles were thoroughly stirred, the liquid was decanted and replaced by at least an equal amount of water. Next, the contents of the receptacles were stirred again before removing the water by decanting.

The cuts of meat were heat seared in an infrared grill by transporting them on a conveyor belt through said grill. The heating conditions employed in the grill are controlled in such a way that on the one hand the surface of the meat pieces develops a typical grill-browned surface whilst at the same ensuring that the core temperature of the meat pieces leaving the grill is below 48 °C. It will be appreciated that the exact conditions depend on the nature and dimensions of the meat cuts, but optimum conditions can be established without difficulty.

After leaving the infrared grill, the heat seared meat pieces are left to steam for approximately 5 minutes before being cooled down by shock freezing. The cooled meat pieces were packaged under nitrogen in a sealed pack and stored under refrigeration conditions.

After 2 days of storage, the different pre-treated meat products were removed from the packs and heated in a microwave (800 W). Preparation time for a steak of 150 grams was 75 seconds. The heated meat products were evaluated by an expert panel. The panel members concluded that the microwave heated meat products were virtually indistinguishable from conventionally grilled meat products.

## Claims

1. A process for preparing a microwaveable meat product, said process comprising the successive steps of:
• providing a cut of raw meat comprising an exterior surface and an inner core, said inner core consisting of the part of the meat that is located 1 cm below the exterior surface;
• contacting the exterior surface of the meat with a tenderizing agent to form a tenderized meat product;
• subjecting the tenderized meat product to a heat treatment during which the exterior surface of the meat product is heated to at least 120 °C to achieve a browning of the exterior surface, whilst ensuring that the temperature within the inner core remains below 60 °C; and
• packaging the heat treated product for later use.

2. Process according to claim 1, wherein the tenderizing agent contains a proteolytic enzyme.

3. Process according to claim 1 or 2, wherein the tenderizing agent is a liquid or a paste.

4. Process according to any one of the preceding claims, wherein the exterior surface of the meat is contacted with the tenderizing agent by submersing the meat in the tenderizing agent.

5. Process according to any one of the preceding claims, wherein the heat treatment is completed within 5 minutes.

6. Process according to any one of the preceding claims, wherein the heat treatment comprises one or more of infrared heating and grilling.

7. Process according to any one of the preceding claims, wherein the heat treated product is cooled to a temperature below 60 °C within 3 minutes after the heat treatment.

8. A packaged microwaveable meat product comprising an exterior surface and an inner core, said inner core consisting of the part of the meat that is located 1 cm below the exterior surface, said microwaveable product being **characterized in that** the interior core of the meat product is uncooked and tenderised and **in that** the exterior surface of the meat has been browned by heating.

9. Packaged microwaveable meat product according to claim 8, wherein the inner core contains proteolytic enzyme that is foreign to the raw meat.

10. Packaged microwaveable meat product according to claim 8 or 9, wherein the cells within the inner core are intact.

11. Packaged microwaveable meat product according to any one of claims 8-10, wherein the cut of meat has a weight in the range of 50-500 grams.

## Patentansprüche

1. Verfahren zur Herstellung eines mikrowellentauglichen Fleischprodukts, wobei das Verfahren die aufeinanderfolgenden Schritte:
• Bereitstellen eines Stückes von Rohfleisch, das eine äußere Fläche und einen inneren Kern umfasst, wobei der innere Kern aus dem Teile des Fleisches besteht, der 1 cm unter der äußeren Fläche liegt;
• Kontaktieren der äußeren Fläche des Fleisches mit einem Zartmacher, um ein zart gemachtes Fleischprodukt zu bilden;
• Durchführen einer Wärmebehandlung mit dem zart gemachten Fleischprodukt, während der die äußere Fläche des Fleischprodukts auf mindestens 120°C erwärmt wird, um eine Bräunung der äußeren Fläche zu erreichen, während sichergestellt ist, dass die Temperatur im inneren Kern unter 60 °C verbleibt; und
• Verpacken des wärmebehandelten Produkts zum späteren Gebrauch umfasst.

2. Verfahren nach Anspruch 1, wobei der Zartmacher ein proteolytisches Enzym enthält.

3. Verfahren nach Anspruch 1 oder 2, wobei der Zartmacher eine Flüssigkeit oder eine Paste ist.

4. Verfahren nach einem der vorhergehenden Ansprüche, wobei die äußere Fläche des Fleisches mit dem Zartmacher durch Eintauchen des Fleisches in den Zartmacher kontaktiert wird.

5. Verfahren nach einem der vorhergehenden Ansprüche, wobei die Wärmebehandlung innerhalb von 5 Minuten abgeschlossen ist.

6. Verfahren nach einem der vorhergehenden Ansprüche, wobei die Wärmebehandlung eines oder mehrere von Infraroterwärmen und Grillen umfasst.

7. Verfahren nach einem der vorhergehenden Ansprüche, wobei das wärmebehandelte Produkt nach der Wärmebehandlung innerhalb von 3 Minuten auf eine Temperatur unterhalb von 60 °C abgekühlt wird.

8. Verpacktes mikrowellentaugliches Fleischprodukt, das eine äußere Fläche und einen inneren Kern umfasst, wobei der innere Kern aus dem Teil des Fleisches besteht, der 1 cm unterhalb der äußeren Fläche liegt, wobei das mikrowellentaugliche Produkt **dadurch gekennzeichnet ist, dass** der innere Kern des Fleischprodukts ungegart und zartgemacht ist und **dadurch**, dass die äußere Fläche des Fleisches durch Erwärmen gebräunt wurde.

9. Verpacktes mikrowellentaugliches Fleischprodukt nach Anspruch 8, wobei der innere Kern dem rohen Fleisch fremdes proteolytisches Enzym enthält.

10. Verpacktes mikrowellentaugliches Fleischprodukt nach Anspruch 8 oder 9, wobei die Zellen im inneren Kern intakt sind.

11. Verpacktes mikrowellentaugliches Fleischprodukt nach einem der Ansprüche 8-10, wobei das Fleischstück ein Gewicht im Bereich von 50-500 g hat.

## Revendications

1. Procédé de préparation d'un produit carné micro-ondable, ledit procédé comprenant les étapes successives consistant à :
fournir un morceau de viande crue comprenant une surface externe et un coeur interne, ledit coeur interne étant constitué par la partie de la viande qui est située 1 cm en dessous de la surface externe ;
mettre en contact la surface externe de la viande avec un agent d'attendrissage pour former un produit carné attendri ;
soumettre le produit carné attendri à un traitement thermique au cours duquel on chauffe la surface externe du produit carné à au moins 120°C pour obtenir un brunissement de la surface externe, tout en faisant en sorte que la température du coeur interne reste inférieure à 60°C ; et
conditionner le produit traité thermiquement pour un usage ultérieur.

2. Procédé selon la revendication 1, dans lequel l'agent d'attendrissage contient une enzyme protéolytique.

3. Procédé selon la revendication 1 ou 2, dans lequel l'agent d'attendrissage est un liquide ou une pâte.

4. Procédé selon l'une quelconque des revendications précédentes, dans lequel la surface externe de la viande est mise en contact avec l'agent d'attendrissage par immersion de la viande dans l'agent d'attendrissage.

5. Procédé selon l'une quelconque des revendications précédentes, dans lequel le traitement thermique est achevé en moins de 5 minutes.

6. Procédé selon l'une quelconque des revendications précédentes, dans lequel le traitement thermique comprend un traitement ou plus parmi le chauffage infrarouge et la cuisson sur le grill.

7. Procédé selon l'une quelconque des revendications précédentes, dans lequel le produit traité thermiquement est refroidi jusqu'à une température inférieure à 60°C dans les 3 minutes qui suivent le traitement thermique.

8. Produit carné micro-ondable conditionné comprenant une surface externe et un coeur interne, ledit coeur interne étant constitué par la partie de la viande qui est située 1 cm en dessous de la surface externe, ledit produit micro-ondable étant **caractérisé en ce que** le coeur interne du produit carné n'est pas cuit et est attendri et **en ce que** la surface externe de la viande a été brunie par chauffage.

9. Produit carné micro-ondable conditionné selon la revendication 8, dans lequel le coeur interne contient une enzyme protéolytique qui est étrangère à la viande crue.

10. Produit carné micro-ondable conditionné selon la revendication 8 ou 9, dans lequel les cellules du coeur interne sont intactes.

11. Produit carné micro-ondable conditionné selon l'une quelconque des revendications 8 à 10, dans lequel le morceau de viande a un poids de 50 à 500 grammes.
